# EUROPEAN PATENT APPLICATION

(11) **EP 4 523 957 A1**
(43) Date of publication of application: **19.03.2025**
(21) Application number: 24196148.1
(22) Date of filing: 23.08.2024
(51) Int. Cl.: B60L 58/18, H02J 7/00

(54) **CONTROL STRATEGY FOR A DISTRIBUTED SYSTEM OF DCDC CONVERTERS**

(30) Priority: 25.08.2023 US 202318456118
(71) Applicant: Volvo Car Corporation, 405 31 Göteborg (SE)
(72) Inventor: LARSSON, Torbjorn, 40531 Göteborg (SE); GANNAMANENI, Narendar Rao, 40531 Göteborg (SE); FORSSELL, Jonas, 40531 Göteborg (SE); EKSTRÖM, Markus, 40531 Göteborg (SE)
(74) Representative: Maiwald GmbH

(57) **Abstract**

Techniques for optimized control of a distributed system of direct current to direct current (DCDC) converters are described. In an example, a method comprises employing, by a system operatively coupled to at least one processor, a smartcell battery system to supply power to an electrical system of an electric vehicle, the smartcell battery system comprising a plurality of battery cell clusters arranged in three strings, each battery cell cluster of the plurality comprising one or more battery cells, DCDC converters connected to respective ones of the battery cell clusters and the electrical system. The method further comprises controlling, by the system, when respective ones of the DCDC converters activate and deactivate generation and provision of respective output voltages to the electrical system using respective ones of the battery cell clusters to which they are connected based on monitored power demands of the electrical system.

## Description

### TECHNICAL FIELD

The subject disclosure relates to electric and/or hybrid electric vehicle drive technologies, and more particularly to control strategies for optimizing control of a distributed system of direct current to direct current (DCDC) converters, particularly in association with supplying power to an electrical system of an electric vehicle.

### BACKGROUND

Currently, Electric vehicles (EVs) are becoming increasingly popular as a more sustainable mode of transportation. However, to improve the performance and efficiency of EVs, it is necessary to develop advanced control techniques for supplying power to electrical systems of the EV from the battery pack.

### SUMMARY

The following presents a summary to provide a basic understanding of one or more embodiments of the invention. This summary is not intended to identify key or critical elements or delineate any scope of the particular embodiments or any scope of the claims. Its sole purpose is to present concepts in a simplified form as a prelude to the more detailed description that is presented later. In one or more embodiments described herein, systems, computer-implemented methods, and/or computer program products that provide control strategies for optimizing control of a distributed system of DCDC converters, particularly in association with supplying power to an electrical system of an electric vehicle.

In an embodiment, a method comprises employing, by a system operatively coupled to at least one processor, a smartcell battery system to supply power to an electrical system of an electric vehicle. The smartcell battery system comprises a plurality of battery cell clusters arranged in three strings, each battery cell cluster of the plurality comprising one or more battery cells, and DCDC converters connected to respective ones of the battery cell clusters and the electrical system. The method further comprises controlling, by the system, when respective ones of the DCDC converters activate and deactivate generation and provision of respective output voltages to the electrical system using respective ones of the battery cell clusters to which they are connected based on monitored power demands of the electrical system.

In another embodiment, a smartcell battery system that supplies power to an electrical system of an electric vehicle is provided. The smartcell battery system comprises a plurality of battery cell clusters arranged in three strings, each battery cell cluster of the plurality comprising one or more battery cells, and DCDC converters connected to respective ones of the battery cell clusters and the electrical system. The smartcell battery system further comprises a master controller that controls when respective ones of the DCDC converters activate and deactivate generation and provision of respective output voltages to the electrical system using respective ones of the battery cell clusters to which they are connected based on monitored power demands of the electrical system.

Another embodiment can include a computer program product is provided that facilitates controlling power supplied to an electrical system of an electric vehicle from a smartcell battery system. The smartcell battery system comprises a plurality of battery cell clusters arranged in three strings, each battery cell cluster of the plurality comprising one or more battery cell, and DCDC converters connected to respective ones of the battery cell clusters. The computer program product can comprise a non-transitory computer readable medium having program instructions embodied therewith, the program instructions executable by a processor to cause the processors to control when respective ones of the DCDC converters activate and deactivate generation and provision of respective output voltages to the electrical system using respective ones of the battery cell clusters to which they are connected based on monitored power demands of the electrical system.

### DESCRIPTION OF THE DRAWINGS

One or more exemplary embodiments are described below in the Detailed Description section with reference to the following drawings.
FIG. 1 illustrates an example smartcell battery system that supplies power to one or more electrical systems of an electric vehicle in accordance with one or more embodiments described herein.
FIG. 2 illustrates a high-level block diagram of an example battery cell unit in accordance with one or more embodiments described herein.
FIG. 3 illustrates a high-level block diagram of an example master board in accordance with one or more embodiments described herein.
FIG. 4 illustrates a circuit diagram of an example smartcell battery system that supplies power to one or more electrical systems of an electric vehicle in accordance with one or more embodiments described herein.
FIG. 5 illustrates an example arrangement for grouping DCDC converters of a distributed system of DCDC converters in accordance with one or more embodiments described herein.
FIG. 6 illustrates an example arrangement for electrically connecting subsets of DCDC converters of the separate low voltage (LV) power supply systems to different LV electrical systems of an electric vehicle in accordance with one or more embodiments described herein.
FIG. 7 illustrates an example control arrangement for controlling subsets of DCDC converters of a distributed system of DCDC converters in accordance with one or more embodiments described herein.
FIG. 8 illustrates examples control arrangements for balancing utilization of DCDC converters of a distributed system of DCDC converters in accordance with one or more embodiments described herein.
FIG. 9 illustrates an example, computer-implemented method for optimizing control of a distributed system of DCDC converters in accordance with one or more embodiments described herein.
FIG. 10 illustrates another example, computer-implemented method for optimizing control of a distributed system of DCDC converters in accordance with one or more embodiments described herein.
FIG. 11 illustrates another example, computer-implemented method for optimizing control of a distributed system of DCDC converters in accordance with one or more embodiments described herein.

### DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

In one or more embodiments described herein, systems, computer-implemented methods, and/or computer program products that provide control strategies for optimizing control of a distributed system of DCDC converters, particularly in association with supplying power to an electrical system of an electric vehicle. As used herein, a distributed system of DCDC converters refers to a smartcell battery system comprising a distributed system of DCDC converters. A smartcell battery system aims to remove large and costly parts from a conventional drivetrain and use the batteries more efficiently. More particularly, a smartcell battery system is a multilevel inverter concept that aims to replace driveline components such as the conventional large inverter by integrating them into printed circuit boards (PCBs) connected to clusters of battery cells. These PCBs are connected wirelessly to a central controller that handles high level control. Each of the PCBs include local wireless communication hardware, a processing unit, memory, a small DCDC converter, switches (e.g., high current and low voltage switches) and other electronic elements that enable them intelligently control and manage operations of the respective battery cells to which they are connected (e.g., rendering them "smart"). Further the PCBs enable the direct current (DC) output from a small battery cluster to be converted into an alternating current (AC) to control an electric motor through field-oriented control (FOC). The battery pack can be configured in a number of different ways depending on need for propulsion, utilization by other high and low voltage electrical systems of the vehicle and charging. Through changing the inverter switching to a smartcell system, the battery back can operate at double the voltage level of similar battery backs using a conventional inverter, resulting in a lower current with less losses. Further only the battery cells needed are activated instead of all batteries needing to be constantly active, thereby increasing efficiency.

The disclosed subject matter is particularly directed to a control strategy for optimizing the usage of the battery pack in association with supplying power to one or more low voltage (LV) and/or high voltage (HV) electrical system of the electric vehicle. More particularly, the techniques are directed to a control strategy for controlling the output voltages supplied to the LV and/or HV electrical system supplied by respective DCDC converters respectively coupled to the PCBs and their respective battery cell clusters. In conventional battery-operated electric vehicles (BEVs), a single DCDC is typically used to convert the DC-voltage from the battery pack into varying voltage levels to suit charging to and from the battery back, and drive the electrical systems of the vehicle. The disclosed techniques replace the single DCDC converter with a plurality of small DCDC converters (e.g., up to about 100 in some implementations), each one fed by a separate cluster of battery cells. With this configuration, the DCDC converters provide multiple and independent parallel sources of voltage power supply for driving the LV and/or HV electrical systems of the vehicle.

At a high level, the control strategy for the DCDC converters selectively uses (e.g., turns on and off) the power supplied by the respective DCDC converters as needed based on the dynamic power demands of the electrical system to which they feed. The operating parameters of the respective DCDC converters that control when to turn on and off are dynamically controlled by the central controller (referred to herein as the "master controller") of the smartcell battery system via wireless communication of control signals to the respective DCDC converters. In various embodiments, the operating parameters include a voltage set point (Vsp) that controls whether the DCDC converters turns on and off voltage supply based on whether the current voltage level of the electrical system increases and decreases relative to its assigned Vsp. The respective DCDC converters can be assigned different Vsps such that the number of DCDCs supplying power to the electrical system at a given time is tailored to meet the current load of the electrical system. In some embodiments, each DCDC converters can automatically control turning on and off voltage generation and supply to the electrical system by monitoring the current voltage level of the electrical system over the course of operation of the vehicle and responding accordingly based on its assigned Vsp. In addition, by using the respective DCDC as needed to satisfy the current load of the electrical system, any of the respective DCDC converters that are active at a given time will be fully loaded (as opposed to partially loaded), thereby optimizing the efficiency of the respective DCDC converters. In this regard, DCDC converters perform most efficiently when they operate under high loads as opposed to low or partial loads.

In some embodiments, the DCDC converters can be grouped into different subsets, each subset comprising two or more of the DCDC converters (with some restrictions as described in greater detail infra). With these embodiments, the same control strategy used for individual DCDC converters can be applied to the respective subsets. In this regard, a subset of DCDC converters can be configured as a group to operate in accordance with the same Vsp, and different subsets of DCDC converters can be assigned different Vsps.

The Vsps assigned to the respective DCDCs converters (or subsets of DCDC converters) thus control the priority order in which the respective DCDC converters (or the subsets) and their corresponding battery cell clusters are used. In some embodiments, the master controller can assign the Vsps based on the current state of charge (SoC) (and optionally other dynamic factors such as temperature, state of health (SoH), and others) of the respective battery clusters such that those battery clusters with a higher SoC are utilized before those with a lower SoC in accordance with the priority order. The master controller can also dynamically adjust the Vsps assigned to the DCDC converters (or the subsets of DCDC converters) to rotate utilization thereof to balance energy consumption from the respective battery cell clusters.

Although the disclosed techniques are described with to optimizing control of a distributed system of DCDC converters in association with utilization thereof to supply power to one or more electrical system of an electric vehicle, the disclosed techniques can be extended to various other domains. In this regard, the disclosed smartcell systems and control strategies can be applied in association with utilization thereof to supply power to various other types of battery powered electrical systems besides those associated with electric vehicles and conventional vehicles.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details. It will be understood that when an element is referred to as being "coupled" to another element, it can describe one or more different types of coupling including, but not limited to, chemical coupling, communicative coupling, electrical coupling, electromagnetic coupling, operative coupling, optical coupling, physical coupling, thermal coupling, and/or another type of coupling.

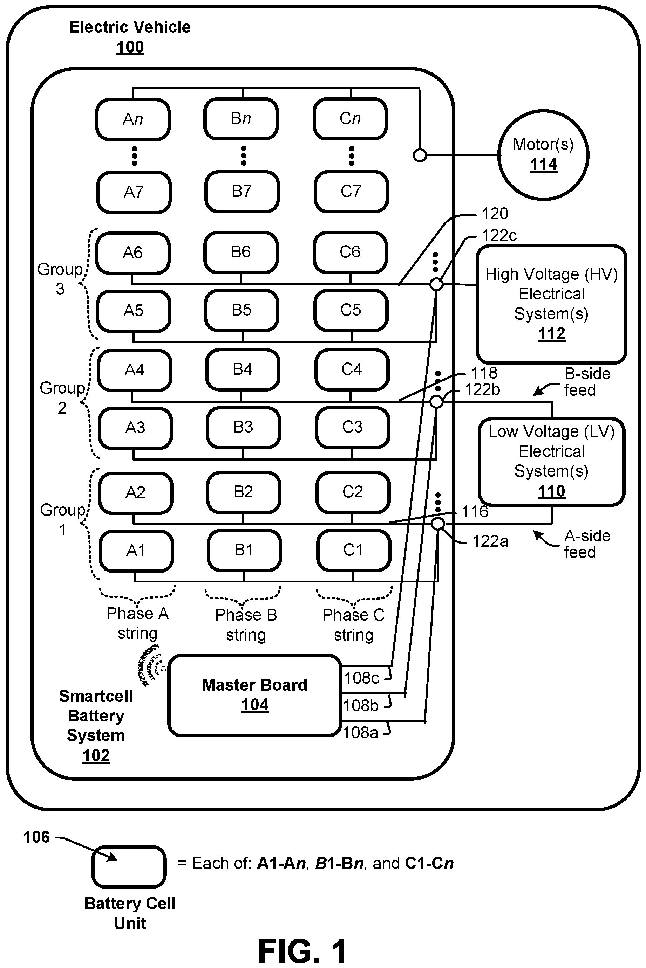

FIG. 1 illustrates an example smartcell battery system 102 that supplies power to one or more electrical systems of an electric vehicle 100 in accordance with one or more embodiments described herein. The one or more electrical systems can include one or more motors 114, one or more high voltage (HV) electrical systems 112 and/or one or more low voltage (LV) electrical systems 110. The one or more LV electrical systems 110 can include any type of electrical system associated with the electric vehicle 100 that typically consumes a DC input voltage less than about 50 volts (V) (e.g., 12V, 14V, 15V, 40V, 48V, etc.). Some examples of the LV electrical systems can include, but are not limited to, a power steering system, an autonomous driving system, an infotainment system, a navigation system, a backup camera system, and the like. The one or more HV electrical systems 112 can include any type of electrical system associated with the electric vehicle 100 that typically consumes a DC input voltage greater than about 50 V (e.g., 48V, 72V, 100 V, 400V, etc.), such as the heating, ventilation and air conditioning (HVAC) system, and others.

The one or more motors 114 (e.g., typically a single motor for a 2-wheel drive vehicle and two motors for a 4-wheel drive vehicle) can include any type of electric vehicle motor that is part the vehicle's powertrain or drive, including one or more DC motors and/or one or more AS motors. In various embodiments, the one or more motors 102 can include or correspond to a three-phase electric motor such as a permanent magnetic synchronous motor (PMSM). A PMSM is a synchronous machine that uses permanent magnets (PM) to generate a magnetic field instead of electromagnetic windings. The three-phase machine operates using a three-phase current system. The fundamental frequency of the supplying three-phase system also decides the rotor speed by controlling the rotating magneto-motive force (MMF). Together with the field of the PM rotor, the MMF generates the torque.

The rotor consists of the PM and three static coils are the stator windings. The stator windings are distributed 120° apart from the PM in the center. The stator windings can be represented as an inductance in series with a resistance. The three windings are described as phase A, phase B, and phase C with the phase currents *iₐ, i_{b}* and *i_{c}.* When the current runs through the static coils a magnetic field is generated according to Faraday's law, and a magnetic field is generated by the PM. When the electrical angle between the MMF of the stator and the rotor field is 90°, the maximum torque is generated.

In conventional BEV systems, the three-phase current used for an AC motor such as PMSM is generated from a DC power supply by an inverter. In accordance with one or more embodiments of the disclosed techniques, the three-phase current is generated from the smartcell battery system 102 without the use of an inverter. To facilitate this end, the smartcell battery system 102 comprises a plurality of battery cells (not shown) arranged in three separate strings respectively corresponding to three different phases (e.g., Phase A string, Phase B string and Phase C string) that can provide the respective three phase currents of a three-phrase current used to drive the one or more motors 114. Although the disclosed techniques are not concerned with the AC power supply to the one or more motors 114, the disclosed techniques utilize a smartcell battery system 102 that arranges the battery cells in this three string manner.

In this regard, as illustrated in FIG. 1, the smartcell battery system 102 includes a plurality of battery cell units 106 arranged in three separate strings respectively indicated as Phase A string, Phase B string and Phase C string. The battery cell units 106 associated with the Phase A string include units A1-A*n*, the battery cell units associated with the Phase B string include units B1-B*n*, and the battery cell units associated with the Phase C string include units C1-C*n*. The number of battery cell units "*n*" associated with each string can vary. For example, in some implementations, the number of battery cell units *n* included in each string is 96, making a total of 288 battery cell units 106 in the smartcell battery system 102. However, the number of battery cell units 106 included in the smartcell battery system 102 are not limited to this configuration and can be tailored to suit various usage scenarios.

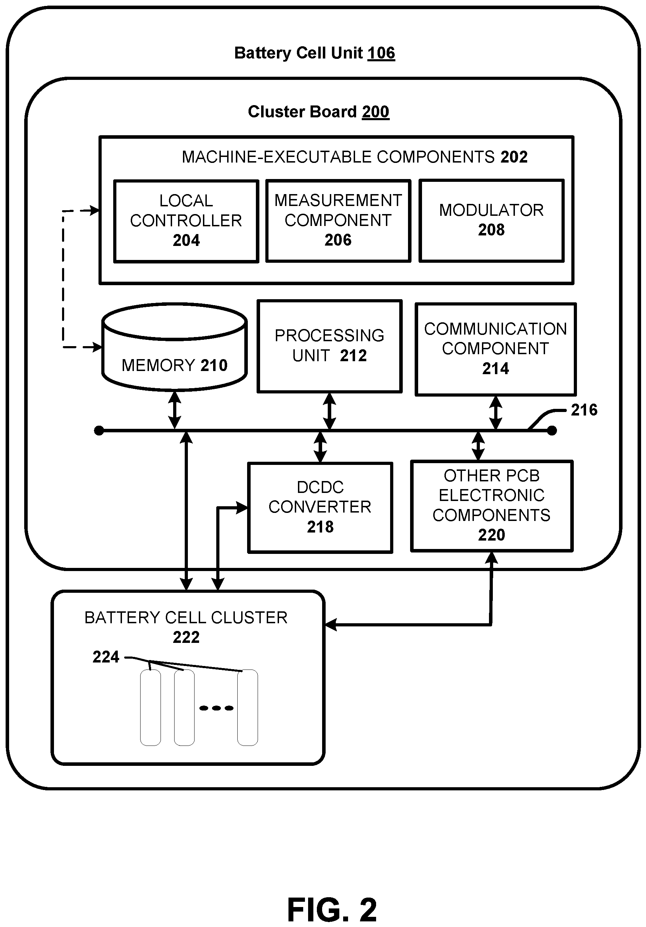

FIG. 2 illustrates a high-level block diagram of an example battery cell unit 106 in accordance with one or more embodiments described herein. With reference to FIGs. 1 and 2, in various embodiments, all or some of the battery cell units 106 A1-A*n*, B1-B*n*, and C1-C*n* shown in FIG. 1 can correspond to battery cell unit 106 illustrated in FIG. 2. As shown in FIG. 2, each (or at least some) of the battery cell units 106 can include a battery cell cluster 222 comprising one or more battery cells 224 and a cluster board 200 physically and operatively coupled to the one or more battery cells 224. The battery cells 224 can respectively comprise any type of battery cell material such as, for instance, a lithium battery cell material, a lithium ion (Li-Ion) battery cell material, a lithium metal battery cell material, a lithium sulphur (Li-S) battery cell material, a molten salt (Na-NiCl2) battery cell material, a nickel metal hydride (Ni-MH) battery cell material, a lead acid battery cell.

The cluster board 200 can include or correspond to a circuit board, or more particularly a PCB that comprises electronic hardware and software components that enable the cluster board 200 to intelligently control operation of the respective battery cells 224 connected thereto. The electronic hardware and software components can include, but are not limited to, a memory 210 that can store computer or machine-executable components 202 (e.g., local controller 204, measurement component 206, and modulator 208), and a processing unit 212 that executes the machine-executable components 202 stored in memory 210. The electronic hardware and/or software components can further include a communication component 214 that enables wireless communication between the cluster board 200 and a master controller 106 associated with a master board 104 of the smartcell battery system 102 (e.g., a transceiver or the like).

The electronic hardware and/or software components can further include a DCDC converter 218. In one or more embodiments, the DCDC converter 218 is electrically connected to the battery cell cluster 222 (e.g., via one or more wired connections) and can convert the voltage output of the battery cell cluster 222 generated by the respective battery cells 224 to a desired output voltage (e.g., a higher or lower voltage) as needed to drive the low voltage and/or high voltage loads of the electrical system to which the battery cell unit 106 is connected. For those battery cell units of the smartcell battery system 102 which supply power to the one or more LV electrical systems 110, the DCDC converter 218 is further electrically connected to the one or more LV electrical systems 110 (e.g., either the A side feed or the B side feed) and controls generation and provision of an output voltage to the one or more LV electrical systems 110 to which it is connected using the battery cell cluster 222 in accordance with control information determined and communicated to the cluster board 200 via the master board 104 (as discussed in greater detail below). Likewise, for those battery cell units of the smartcell battery system 102 which supply power to the one or more HV electrical systems 112, the DCDC converter 218 is further electrically connected to the one or more HV electrical systems 112 and controls generation and provision of an output voltage to the one or more HV electrical systems 112 to which it is connected using the battery cell cluster 222 in accordance with control information determined and communicated to the cluster board 200 via the master board 104 (as discussed in greater detail below).

The electronic hardware and/or software components can further include various other PCB electronic components 220 that can include or correspond to various other electronic circuit elements that facilitate operations of the cluster board 200 and the battery cell cluster 222. For example, the other PCB electronic components 220 can include or correspond to one or more switches, wires, ports, and so on. The one or more switches can comprise, for instance, metal-oxide-semiconductor field-effect transistor (MOSFET) switches that can facilitate different operating modes of the battery cells 224 individually and/or the battery cell cluster (e.g., off, positive, negative, bypass, etc.) as controlled by the local controller, the modular 208 and/or the DCDC converter 218 in accordance with one or more embodiments of the subject disclosure described herein. In various embodiments, the one or more switches can include an H-bridge electronic circuit having multiple switches (e.g., 4 switches comprising 4 MOSFET switches).

The other PCB electronic components 220 can also include one or more sensors that enable the cluster board 108 to measure various operating parameter of the battery cell cluster 222 to which it is connected and/or the electrical system to which it is connected (e.g., the one or more LV electrical systems 110 or the one or more HV electrical systems 112). For example, in some embodiments, the other PCB electronic components 220 can include or correspond to a voltage meter that can measure the current operating voltage level of the electrical system to which it is connected. Additionally, or alternative, the other PCB electronic component 220 can include one or more sensors that can measure other parameter data of the cluster board 106 and/or the battery cells 224 to which the cluster board 106 is connected, such as but not limited to: state of charge (SoC), state of health (SoH), current output, current input, temperature; pressure (e.g., swelling); chemistry (e.g., chemistry on electrolyte to monitor aging); acceleration (e.g., to sense a crash of, for instance, an electric vehicle comprising device); voltage (e.g., voltage potential across cell material poles of active cell material); and/or other parameter data of the cluster board 106 and/or the battery cells 224 The cluster board 200 can further include a system bus 216 that couples the various electronic hardware and software components of the cluster board 200 and/or the battery cell unit 106 to one another.

In this regard, the smartcell battery system 102 can be defined as comprising a plurality of battery cell clusters (e.g., one battery cell cluster 222 connected to each of the battery cell units 106, A1-A*n*, B1-B*n*, and C1-C*n*) and DCDC converters (e.g., respectively corresponding to DCDC converter 218) connected to respective ones of the battery cell clusters. In some embodiments, all or some of the battery cell clusters 222 respectively associated with the battery cell units 106 A1-A*n*, B1-B*n*, and C1-C*n* can include between one and eight battery cells 224 respectively configured to provide an output DC voltage of about 3.7 V. However, the number and type of battery cells 224 included in each battery cell cluster 222 coupled to each battery cell unit 106 A1-A*n*, B1-B*n*, and C1-C*n* can vary and tailored to supply a specific voltage amount to meet a specific usage scenario. For example, the amount of DC voltage supplied by each battery cell cluster 222 associated with each battery cell unit 106 can vary.

In accordance with the arrangement illustrated in FIG. 1, in some embodiments, the battery cell units 106 A1-A*n*, B1-B*n*, and C1-C*n* can be grouped into different groups (e.g., Group 1, Group 2, and Group 3) comprising two or more battery cell units 106 connected in parallel via a system bus (e.g., a wired network connection) and configured to form separate power supply systems that can be independently controlled. For example, as illustrated in FIG. 1, the separate power supply systems can include a first power supply system corresponding to Group 1 comprising a plurality of battery cell units (e.g., units A1, A2, B1, B2, C1 and C2 in the illustrated example) connected to one another and the one or more LV electrical systems 110 via system bus 116. More particularly, each of the battery cell units included in the first power supply system corresponding to Group 1 can correspond to battery cell unit 106 illustrated in FIG. 2, wherein the system bus 116 connects the respective DCDC converters 210 of each battery cell unit included in the first power supply system (e.g., units A1, A2, B1, B2, C1 and C2 in the illustrated example) to one another in parallel, forming a distinct power channel to the one or more LV electrical systems 110.

The separate power supply systems can also include a second power supply system corresponding to Group 2 comprising a plurality of battery cell units (e.g., units A3, A4, B3, B4, C3 and C4 in this example) connected to one another and also connected the one or more LV electrical systems 110 via system bus 118. More particularly, each of the battery cell units included in the second power supply system (e.g., Group 2) can correspond to battery cell unit 106 illustrated in FIG. 2, wherein the system bus 118 connects the respective DCDC converters 210 of each battery cell unit included in the second power supply system (e.g., units A3, A4, B3, B4, C3 and C4 in this example) to one another in parallel. In various embodiments, the first power supply system (Group 1) and the second power supply system (Group 2) can be the same or substantially the same and serve as separate, redundant LV power supply channels (respectively referred to as the A-side feed and the B-side feed) for one or more LV electrical systems 110 that need redundant power channels in accordance with automotive safety integrity level (ASIL) requirements, such as an autonomous drive system and others.

The separate power supply systems can also include a third power supply system corresponding to Group 3 comprising a plurality of battery cell units (e.g., units A5, A6, B5, B6, C5 and C6 in this example) connected to one another and the one or more HV electrical systems 112 via system bus 120. More particularly, each of the battery cell units included in the third system (e.g., Group 3) can correspond to battery cell unit 106 illustrated in FIG. 2, wherein the system bus 120 connects the respective DCDC converters 210 of each battery cell unit (e.g., units (e.g., units A5, A6, B5, B6, C5 and C6 in this example) to one another in parallel, forming a distinct power channel to the one or more HV electrical systems 112.

In various embodiments, all of the battery cell units 106, A1-n, B1-n, and C1-n (or portions thereof as applied two electric motors in a 4-wheel drive machine) can be used to feed AC electrical current to the one or more motors 114. With these embodiments, each of more of the first, second and third power supply systems corresponding to Groups 1, 2 and 3 can be used to feed AC power for propulsion to the one more motors 114 and the corresponding LV or HV electrical systems to which they are connected. To facilitate this end, each of the battery cell units 106 (e.g., each of their respective circuit boards 200) can include an H-bridge, and each of the H-bridges can be connected in series (via wired connections). The battery cell units 106 can feed the respective AC phase currents from (each of the three phase strings A, B and C) to the one or more motors 114 via their respective battery cell clusters and H-bridge connections independent from their respective DCDC converters which feed the DC current to the corresponding LV electrical systems 110 or HV electrical systems 112 to which they are connected. Various configurations are envisioned.

It should be appreciated that although the number of battery cell units 106 respectively included in the first, second, third and fourth power supply systems (e.g., Group 1, Group 2, and Group 3), as illustrated in FIG. 1 is 6, that this arrangement is merely exemplary. In this regard, the number of battery cell units 106, and/or the number and type of battery cells 224 respectively included in the different power supply systems corresponding to Groups 1, 2, 3 and 4 can vary and be tailored to enable generating a desired output voltage feed to the respective electrical systems to which they are connected via the respective DCDC converters. (e.g., it should be appreciated that the battery cells 224 do not directly supply the DC power to the LV and HV electrical systems, as there is always a DCDC converter between the respective battery cells clusters and the LV and HV boardnets). In an example embodiment, the number of battery cell units 106, and/or the number and type of battery cells 224 respectively included in the first and second power supply systems can be tailored enable generating an output voltage feed to the one or more LV electrical systems 110 of about 15 V respectively, and the number of battery cell units 106 and/or the number and type of battery cells included in third power supply system (Group 3) can be tailored to enable generating an output voltage feed to the one or more HV electrical systems112 of about 400 V. However, other configurations are envisioned.

The smartcell battery system 102 further includes a master board 104 that can include or correspond to a centralized circuit board, PCB and/or computing device comprising electrical hardware and software components that facilitate intelligently controlling and managing operations of some or all of the battery cell units 106 A1-A*n*, B1-B*n*, and C1-C*n* and/or the electrical systems to which they are connected.

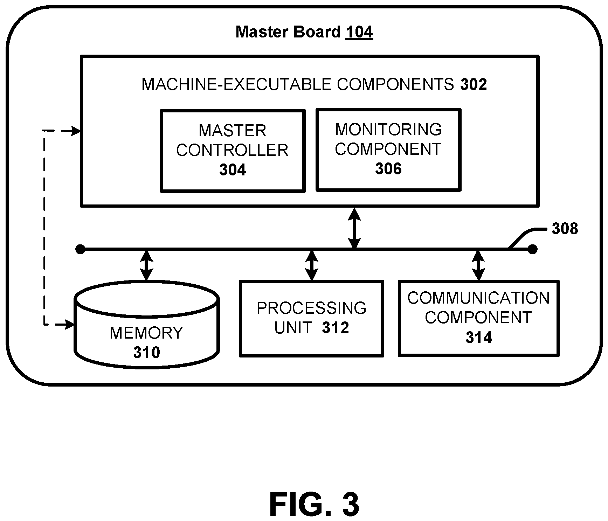

FIG. 3 illustrates a high-level block diagram of an example master board 104 in accordance with one or more embodiments described herein. With reference to FIGs. 1, 2 and 3, in various embodiments, master board 104 can include a memory 310 that can store computer or machine-executable components 302 (e.g., master controller 304 and monitoring component 306), and a processing unit 312 that executes the machine-executable components 302 stored in memory 310. The master board 104 can further include a communication component 314 that enables wireless communication between the master board 104 and the cluster boards 200 of each battery cell unit 106.

In this regard, communication component 314 and communication component 214 can respectively include or correspond to suitable hardware and/or software that enables wireless communication between the master board 104 and the respective cluster boards 200, and optionally other external systems and/or devices. For example, the respective communication components can comprise a transmitter, a receiver, and/or a transceiver. The respective communication component can employ any suitable proprietary and/or non-propriety wireless communication protocols, which can comprise virtually any desired wired or wireless technology, including but not limited to: powerline ethernet, wireless fidelity (Wi-Fi), BLUETOOTH^{®}, fiber optic communications, global system for mobile communications (GSM), universal mobile telecommunications system (UMTS), worldwide interoperability for microwave access (WiMAX), enhanced general packet radio service (enhanced GPRS), third generation partnership project (3GPP) long term evolution (LTE), third generation partnership project 2 (3GPP2) ultra mobile broadband (UMB), high speed packet access (HSPA), Zigbee and other 802.XX wireless technologies and/or legacy telecommunication technologies, Session Initiation Protocol (SIP), ZIGBEE^{®}, RF4CE protocol, WirelessHART protocol, 6LoWPAN (IPv6 over Low power Wireless Area Networks), Z-Wave, an ANT, an ultra-wideband (UWB) standard protocol, and/or other proprietary and non-proprietary communication protocols. In such an example and as described above, the master board 104 and the respective cluster boards 200 can thus respectively include hardware (e.g., a central processing unit (CPU), a transceiver, a decoder, an antenna, quantum hardware, a quantum processor, etc.), software (e.g., a set of threads, a set of processes, software in execution, quantum pulse schedule, quantum circuit, quantum gates, etc.) or a combination of hardware and software that facilitates communicating information between master board 104 and the respective cluster boards 200 and external systems, sources, and/or devices (e.g., computing devices, communication devices, etc.).

With reference particularly to power supply systems that supply DC power to the one or more LV electrical systems 110 (Groups 1 and 2) and the one or more HV electrical systems 112 (Group 3), in accordance with the disclosed techniques, each battery cell unit 106 of these systems can include a DCDC converter 218 fed by a separate cluster of battery cells (e.g., battery cell cluster 222), wherein each DCDC converter 218 provides a separate DC output voltage to the corresponding LV or HV electrical system to which it is connected using its battery cell cluster 222. In various embodiments, the generation and provision of respective output voltages by each DCDC converter 218 to the LV or HV electrical system to which it is connected can be independently controlled by the master board 104 (e.g., via master controller 304) based on monitored power demands of the corresponding electrical system in accordance with a defined control protocol. In particular, the master controller 304 can control when each DCDC converter 218 turns on and off generation and provision of a DC output voltage to the LV or HV electrical system to which it is connected based on the dynamic load of that electrical system such that only the amount of DCDC converters utilized at any given time is tailored to meet the current load on the electrical system. In this regard, when the load increases, the number of DCDC converters activated and supplying power to the electrical system can increase and when the load decreases, the number of DCDC converters activated and supplying power can decrease. Each of the different DC power supply systems corresponding to Group 1, Group 2, and Group 3 can also be independently controlled. The control protocol used to control each of the different DC power supply systems can be the same or substantially the same, with some variation with respect to the specific voltage set point values used for the HV power supply system (Group 3) relative to the LV power supply systems (Groups 1 and 2), as described below.

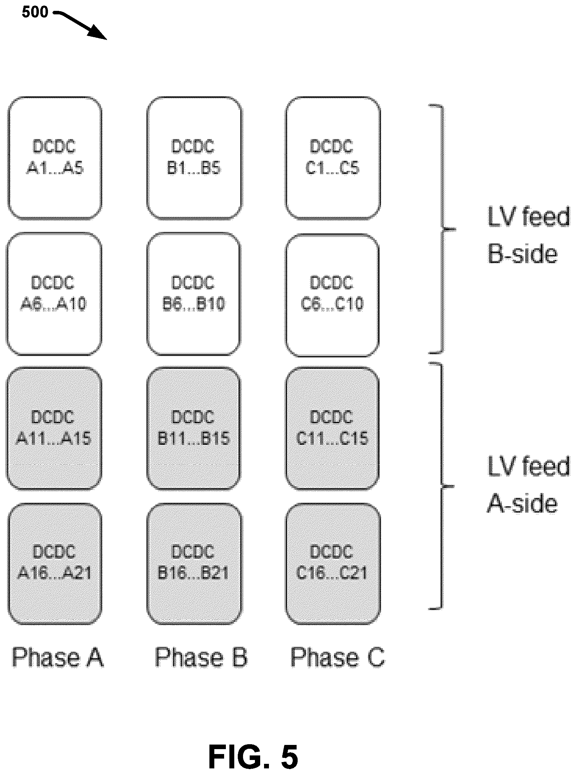

To facilitate this end, in one or more embodiments, the master controller 304 can assign different voltage set points (Vsps) to different ones of the DCDC converters connected to the same power supply system of the first, second and third power supply system. For ease of description, lets refer to a single DC power supply system of the three different systems corresponding to Group 1, Group 2, and Group 3, as the control protocol applied to each of the different systems can be the same or substantially the same. In this regard, with reference to the first power supply system corresponding to Group 1 in association with feeding a LV electrical system of the one or more LV electrical system, in an example embodiment, the master controller 304 can assign different DCDC converters respectively connected to different ones of the battery units A1, A2, B1, B2, C1, C2 different Vsps. For example, in some implementations, the master controller 304 can assign different Vsps to each of the different DCDCs converters (e.g., each DCDC converter of units A1, A2, B1, B2, C1, C2, etc. can have a different Vsp). In other implementations, the master controller 304 can assign the same Vsp to a subset of the DCDC converters, wherein the subset can comprise two or more DCDC converters, and further assign different Vsps to different subsets of DCDC converters and/or individual DCDC converters (e.g., DCDC converters of units A1 and A2 can have a first Vsp, DCDC, DCDC converters of units B1 and B2 can have second Vsp, DCDC converter of unit C1 can have a third Vsp, and DCDC converter of unit C2 can have a fourth Vsp, wherein the first, second, third and fourth Vsps are different). In some implementations of these embodiments, respective DCDC converters grouped into a same subset can be connected to one another via one or more wired connections and configured to generate and provide an aggregated or combined DC output voltage. With these embodiments, the master controller 304 can control all DCDC converters grouped and connected to one another in the same subset in accordance with the same Vsp such that all DCDC converters in the same subset activate and deactivate generation and provision of the aggregated or combined DC output voltage to the electrical system to which they are connected at the same time. These implementations are discussed in greater detail with reference to FIGs. 5-8, however the same control strategy applied to individual DCDC converters can be applied to subsets of DCDC converters assigned the same Vsp.

In various embodiments, the master controller 304 can accomplish assigning DCDC converters their respective Vsps via wireless communication of respective control signals to their corresponding battery cell units 106 (e.g., using communication component 314 and respective communication components 214 of the battery cell units 106). For example, in some embodiments, the master controller 304 can transmit separate control signals to each of the respective battery cell units 106, wherein each of the separate control signals comprises the particular Vsp assigned to the DCDC converter 218 of the corresponding battery cell unit. In other embodiments, the master controller 304 can broadcast the same control signal to all of the respective battery cell units of the same DC power supply system (e.g., of respective power supply systems corresponding to Groups 1, 2 and 3) wherein the same control signal comprises information identifying the different Vsps assigned to different DCDCs indexed by unique identifiers for each of the DCDCs or their corresponding battery cell units 106. With these embodiments, the local controllers (e.g., local controller 204) associated with the respective battery cell units 106 can identify and extract the particular Vsp assigned thereto based on their respective unique identifiers.

In either of these embodiments, based on reception of a control signal by a cluster board 200 comprising a Vsp assigned to its DCDC converter 218, the DCDC converter 218 can be configured (e.g., via the local controller 204) to control activation and deactivation of generation and provision of an output voltage by the DCDC converter 218 to the LV or HV electrical system to which it is connected in accordance with its assigned Vsp. For example, the local controller 204 can direct the DCDC converter 218 to operate in accordance with its assigned Vsp in response to reception of the control signal. What this means is that the DCDC converter 218 can be configured to activate and deactivate generation and provision of an output voltage to the electrical system to which it is connected (e.g., a LV electrical system in accordance with reference to Group 1) using the battery cell cluster 222 to which it connected based on the whether the operating voltage level of the electrical system decreases or increases relative to its assigned Vsp. For sample, the DCDC converter 218 can be configured to activate generation and provision of the output voltage if the current operating voltage of the electrical system is equal to or less than its assigned Vsp, and configured to deactivate generation and provision of the output voltage if the current operating voltage of the electrical system is greater than its assigned Vsp. In this regard, the current operating voltage of the electrical system (or simply the electrical system voltage) as used in this context to control activation/deactivation of power supply by a DCDC converter connected to the electrical system refers to the output voltage at the output side of the electrical system. In accordance with the disclosed techniques, all of the DCDC converters connected to the same electrical system (e.g., the one or more LV electrical systems 110 or the one or more HV electrical systems 112) are connected to the output side of that electrical system (e.g., connected in parallel at output side to the electrical LV system or the HV electrical system), and thus can respectively senses/measures the output voltage of the electrical system (e.g., via one or more sensors of their corresponding cluster boards 200 and/or additional sensors).

In this regard, a Vsp can include or correspond to a voltage level value (e.g., 15.5V, 15.4V, 15.3V, etc.) that controls when the DCDC converter 218 turns on or off voltage generation and supply to the electrical system based on whether the current operating voltage (or output voltage) of the electrical system increases or decreases relative to the voltage level value. The Vsps used to control power supply to the one or more LV electrical systems 110 can be tailored based on a predefined minimum and maximum operating voltage level for these systems (e.g., between 13.5V and 15.5V). Likewise, the Vsps used to control power supply to the one or more HV electrical systems 112 can be tailored based on a predefined minimum and maximum operating voltage level for these systems (e.g., between 400.5 V and 390.5V). In some embodiments, the amount of the voltage output to be generated and supplied to the electrical system by each DCDC converter (or subset of DCDC converters) can be predefined. In other embodiments, the amount of the voltage output to be generated and supplied to the electrical system by each DCDC converter (or subset of DCDC converters) can be determined by the master controller 304 and included in the control signal.

In accordance with the subject control protocol, the master controller 304 can assigned different Vsps to different DCDC converters of the same power supply system (e.g., corresponding go Groups 1, 2 and 3 respectively) with a defined offset voltage between the different Vsps (e.g., 0.1 V or another offset amount tailored to the LV or HV electrical system) in a linear cascading or descending order within the predetermined voltage level range (e.g., between the defined minimum and maximum Vsp). For example, as applied to DCDC converters of the first power supply system corresponding to Group 1 (e.g., the A-side LV electrical system feed) one or more first DCDC converters can be assigned a Vsp of 15.5V, one or more second DCDC converters can be assigned a Vsp of 15.4V, one or more third DCDC converters can be assigned a Vsp of 15.3V, and so and on. By assigning different Vsps to different DCDC converters of the same power supply system in this manner, the number of DCDC converters actively generating and supplying a voltage output to the corresponding electrical system at any given time will be tailored to the current load on the electrical system. In this regard, as the load on the electrical system increases, the operating voltage level of the electrical system will decrease, triggering additional DCDC converters to become activated as the operating voltage level reaches their corresponding Vsp. Likewise, as the load on the electrical system decreases, the operating voltage level of the electrical system will increase, triggering those DCDC converters with Vsps lower than the current operating voltage to turn off as the operating voltage level reaches increases above their corresponding Vsp. The different Vsps assigned to the respective DCDC converters thus control the priority order in which the respective DCDC converters activate and deactivate generating and providing respective output current to the electrical system to which they are connected using their respective battery cell clusters.

For example, with respect to the DCDC converters forming one of the LV power supply systems (e.g., corresponding to Group 1 or 2), assume each DCDC converter can produce a maximum output power of 100 Watts (W). This means that three DCDC converters activated at the same time can generate 300 W. In accordance with this example, if only one DCDC is activated and the load of the electrical system exceeds 100 W, the output voltage from the one active DCDC will start to be decreased. It should be appreciated that if two or more DCDC converters are connected in series, their output voltages are additive in this manner when activated. On the other hand, when the DCDC converters are connected in parallel, they will produce roughly the same voltage dependent of Vsp and load. In accordance with one or more embodiments, when the electrical system is supplied by DCDC converters connected in parallel to supply the loads, the individual DCDC converters will only supply power to the electrical system if the voltage becomes lower by increased current consumption by the loads connected to the electrical system (e.g., the electrical system output voltage will decrease if the electrical loads consume more current, and opposite if the electrical loads consume less current). Accordingly, the respective DCDC converters will automatically start and produce power if the electrical system voltage becomes lower than their respective Vsps based on increased current consumption by the load.

In addition, by configuring the DCDC converters to only activate when the load of the electrical system results in the current operating voltage level of the electrical system to reach their respective Vsps, the activated DCDC converters will be operating under fully loaded conditions (e.g., high loads), as opposed to partially loaded conditions (e.g., low loads), thereby optimizing their efficiency. In this regard, DCDC converters perform more efficiently under higher loads relative to lower loads.

In some embodiments, in addition to assigning different Vsps to different DCDC converters of the same power supply system feeding the one or more LV electrical systems 110 or the one or more HV electrical systems 112, all of the DCDC converters of the same power supply system can be configured to activate the generation and provision of respective output voltages to the electrical system to which they are connected based on whether the current voltage level of the electrical decreases below a minimum Vsp to ensure that power will always be delivered to the corresponding electrical system during usage of the vehicle 100. In some implementations, the cluster board 200 can facilitate this end by using a hardware circuit and/or a modulator 208 configured to generate the needed pulse width modulation (PWM) signal from the battery cell cluster 222 and the DCDC converter 118 which ensures the minimum voltage is delivered by the DCDC converter 218.

In various embodiments, each of the DCDC converters can be configured to automatically activate and deactivate generation and provision of their respective output voltages in response to the current operating voltage of the electrical system to which they are connected (e.g., the one or more LV electrical systems 110 or the one or more HV electrical systems 112) decreasing and increasing relative to its assigned Vsp. To facilitate this end, in some embodiments, each of the DCDC converters can include or be electrically connected (e.g., either directly via wired connections or via one or more wireless communication networks) at least one sensor (e.g., a voltage meter) connected to the electrical system and or the corresponding power supply system (e.g., corresponding to Groups 1, 2 and 3) configured to measure the operating voltage of the electrical system continuously and/or in accordance with a defined update rate (e.g., every 1.0 ms, every 0.1 ms, every 0.01 ms, or anther suitable update rate. For example, as illustrated in FIG. 1, in some embodiments, each DC power supply system can include a voltage meter (e.g., voltage meter 122a, voltage meter 122b, and voltage meter 122c, respectively), connected to the electrical channel that feeds the corresponding LV or HV electrical system and measures the operating voltage of the corresponding electrical system. With these embodiments, each DCDC converter can also be electrically connected to the corresponding voltage meter to obtain the measured current operating voltage of the electrical system. In other embodiments, at least one sensor can be included in the one or more other PCB electronic component 220 connected to the cluster board 200. In either of these embodiments, the measuring component 206 can be configured to continuously monitor the current operating voltage of the electrical system and the local controller 204 can direct the DCDC converter 218 to activate or deactivate based on whether the current operating voltage increases and decreases relative to its assigned Vsp.

Additionally, or alternatively, the master board 104 can be electrically connected (e.g., via respective wired connections 108a, 108b and 108c) to the respective voltage meters 122a, 122b and 122c and configured to continuously measure and monitor (e.g., via monitoring component 306) the current operating voltages of the corresponding LV or HV electrical systems. With these embodiments, the master controller 304 can be configured to continuously broadcast the current operating voltage levels of the respective electrical systems to corresponding cluster boards 200 connected to the respective electrical systems in accordance with a defined update rate (e.g., every 1.0 ms or the like). The local controllers 204 can further relay the current operating voltage levels to their DCDC converters which can in turn respond accordingly based on their Vsp. Additionally, or alternatively, the local controllers 204 can direct their respective DCDC converters to activate or deactivate based on whether the current operating voltage level of the electrical system increase or decreases relative to its assigned Vsp. Various configurations are envisioned.

In various embodiments, the master controller 304 can assign the different Vsps to the DCDC converters based on states of charge of the respective battery cell clusters to which the DCDC converters are respectively connected. In this regard, as noted above, the different Vsps assigned to the respective DCDC converters 218 control the priority order in which the respective DCDC converters and their respective battery cell clusters are used, with those having a higher Vsp being used first relative to those having a lower Vsp. With this configuration the DCDC converters assigned higher Vsps will be activated and used more frequently than those with loser Vsps, resulting in their corresponding battery cell clusters having a higher rate of depletion in SoC relative the battery cell clusters connected to DCDC converters with lower Vsps. Thus, in various embodiments, to balance utilization of the respective battery cells clusters evenly, the master controller 304 can dynamically adjust or reassign the Vsps to the respective DCDC converters based on the respective SoCs of the battery cell clusters. For example, the master controller 304 can assign DCDC converters connected to battery cell clusters having a relatively higher SoC a higher Vsp relative to the DCDC converters connected to battery cell clusters having a relatively lower SoC. Over the course of operation of the vehicle 100, the master controller 304 can further dynamically change or reassign the Vsps assigned to the respective DCDC converters based on changes to the SoC of their respective battery cell clusters. For example, the master controller 304 can assign a DCDC converter a high Vsp when it's battery cell cluster has a high SoC, and after the SoC of the battery cell cluster drops below a certain threshold, assign the DCDC converter a lower Vsp. With these embodiments, information regarding the SoC of the respective battery cell clusters 222 can be measured (e.g., via one or more sensors and measurement component 206) and reported to the master controller 304 by the respective cluster boards 200 to which they are connected via wireless communication in accordance with a defined update rate (e.g., every 1 ms, every 10 ms, every minute, etc.).

Additionally, or alternatively, the master controller 304 can periodically adjust the different Vsps assigned to the DCDC converters in a manner that rotates the priority order amongst the DCDC converters over time to balance energy consumption amongst their respective battery cell clusters. In various embodiments, in association with assigning and reassigning the different Vsps to the DCDC converters over the course of operation of the vehicle, the master controller 304 can also assign and reassign the different Vsps in a manner such that the priority order balances utilization of the DCDC converters between the three strings of the smartcell battery system 102 (e.g., the Phase A string, the Phase B string and the Phase C string). In other words, the priority order of utilization of the battery clusters can be controlled by shifting the Vsp commands from the master controller to rotate energy usage between battery cell clusters and the different strings. This strategy ensures that the energy balance between the three phases or stings of the battery pack can be controlled.

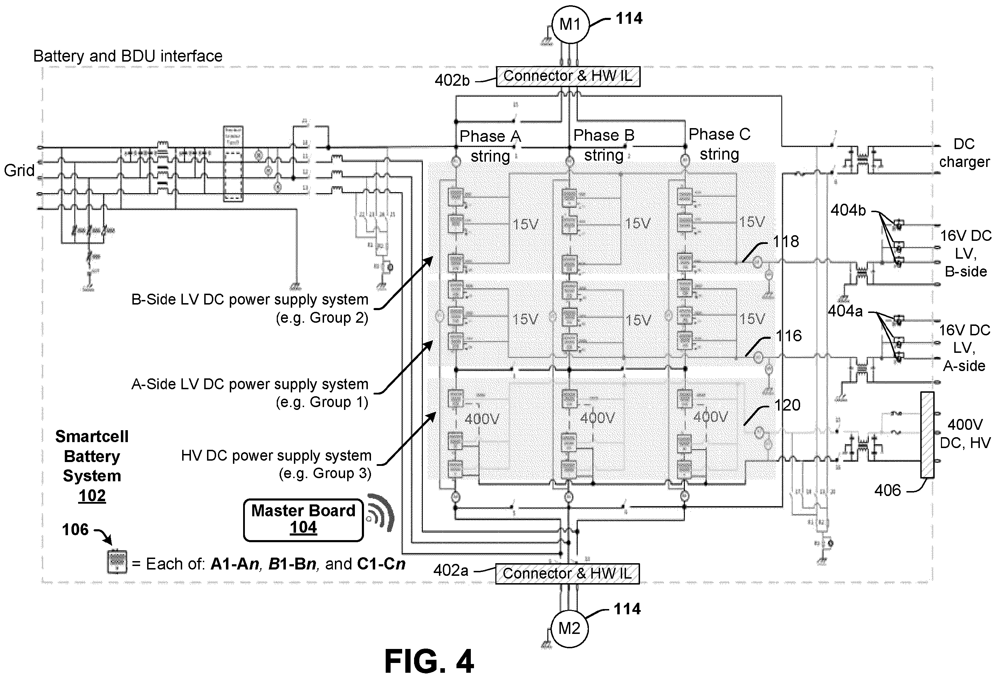

FIG. 4 illustrates a circuit diagram of the smartcell battery system 102 in accordance with one or more embodiments described herein. The circuit diagram 400 provides a more detailed illustration of an example circuit arrangement of the smartcell battery system 102 in accordance with one or more example embodiments. For sake of brevity, wired connections between the master board 104 the respective power supply system feeds are omitted. With reference to FIGs. 1 and 4, as illustrated in FIG. 4, in one or more embodiments, the smartcell battery system 102 can include three separate DC power supply systems, including an A-side LV DC power supply system corresponding to Group 1 which feeds a low DC voltage (e.g., 16V in this example) to one or more LV electrical systems 110; a B-side LV DC power supply system corresponding to Group 2 which also feeds a low DC voltage (e.g., 16V in this example) to the one more LV electrical systems 110; and a HV DC power supply system corresponding to Group 3, which feeds a high DC voltage (e.g., 400V in this example) to the one or more HV electrical systems 112. The A-side LV DC power supply system can be connected to the one or more LV electrical systems 110 via system bus 116 and one or more smart fuses 404a. Likewise, the B-side LV DC power supply system can be connected to the one or more LV electrical systems 110 via system bus 118 and one or more smart fuses 404b. The HV DC power supply system can be connected to the one or more HV electrical systems 112 via one or more connectors 406. Also as shown in FIG. 4, all three power supply systems can be connected to the to the motors 114 (e.g., via hardware connector components 402a and 402b, respectively), and used to supply AC power to the motors 114, which in this embodiment includes two motors (e.g., M1 and M2 respectively). For example, the connector component 402a and 402b can respectively include or be coupled to hardware (HW) interlock (IL) elements that are used to monitor and ensure that connectors are securely in place so that the AC power can be safely supplied to the motors and/or to externally charge the battery pack. In addition, the DC supply channels of all three power supply systems can be galvanically separated from the AC propulsion channels of the smartcell battery system 102. The battery pack (e.g., including all battery cells of the respective battery cell units 106) can be charged from the grid (left side of the diagram) or an external DC charger (e.g., right side of the diagram).

FIG. 5 illustrates an example arrangement 500 for grouping DCDC converters of a distributed system of DCDC converters (e.g., smartcell battery system 102) in accordance with one or more embodiments described herein. With reference to FIGs. 1-5, as noted above with reference to FIGs. 1-3, in some embodiments, the DCDC converters of the same power supply system (e.g., corresponding to Group 1, Group 2, and Group 3 respectively) can be grouped into different subsets respectively comprising two or more DCDC converters. The number of DCDC converters included in the same subset can vary. With these embodiments, the master controller 304 can control all of the DCDC converters in the same subset in the same manner, that is according to the same Vsp, using the same broadcasted control signal to the subset with the same Vsp to be applied to each DCDC converter in the subset. In some implementations of these embodiments, the master controller 304 can logically group two or more DCDC converters into the same subset. With these implementations, the master controller 304 can dynamically adjust the grouping of the DCDC converters into different subsets (e.g., changing which ones of the DCDC converts are grouped together and the number of respective DCDC grouped together) as needed based on respective SoCs of the battery cell clusters, the level of control accuracy desired, the monitored power demands of the electrical system to which they feed and other factors.

In other implementations of these embodiments, each of the DCDC converters grouped into the same subset can be electrically connected to one another via one or more wired connections (e.g., buses) and configured collectively together generate and supply an aggregated or combined output voltage to the electrical system using their collective battery cell clusters. In accordance with these implementations, each subset of the DCDC converts can be restricted to only include DCDC converters located on the same string or phase of the three respective phase strings of the smartcell battery system 102, as illustrated in example arrangement 500 and the embodiment shown in FIG. 4. In addition, the DCDC converters included in each subset can be electrically connected via one or more wired connections in parallel along the same string on which they are located (e.g., as illustrated in FIG. 4). Further, although each DCDC converter of the same subset is connected in parallel, they can each be controlled by the master controller 304 in accordance with an assigned Vsp individually or as a unified subset.

In this regard, example arrangement 500 demonstrates grouping DCDC converters for the two LV independent power supply systems corresponding to the LV A-side feed (e.g., Group 1) and the LV B-side feed (e.g., Group 2). The DCDC converter subsets of the respective power supply systems are distinguished from one another via gray (A-side) and white fill (B-side) respectively for ease of illustration. In accordance with example arrangement 500, each gray and white box corresponds to a subset of DCDC converters grouped together in the same subset. Both the A-side feed and the B-side feed are configured to be the same with respect to the number of subsets (e.g., six subsets each) and the number of DCDC converters included in each subset, which in this example is five. For instance, the subset identified as DCDC A1...A5 represents a grouping of the DCDC converters respectively connected to battery cell units A1-A5, the subset identified as DCDC B1...B5 represents a grouping of the DCDC converters respectively connected to battery cell units B1-B5, and so on. As illustrated in example arrangement 500, each subset of DCDC converters only includes DCDC converts located on the same phase (e.g., Phase A, Phase B, or Phase C). In addition, the subsets are arranged such that equal amounts of subsets and thus respective DCDC converters are located on each of the three strings or phases.

In accordance with the example embodiment shown in FIG. 4, both the A-Side LV power supply system (e.g., Group 1) and the B-Side LV power supply system respectively group their DCDC converters into three subsets, one subset for each phase or string, each subset comprising three DCDC converters (of the corresponding battery cell units 106) connected in parallel, and configured to supply an aggregated output voltage of 15V. Various other configurations are envisioned. Similarly, the HV DC power supply system (e.g., Group 3) groups the DCDC converters into three subsets, one subset for each phase or string, and each subset comprising three DCDC converters (of the corresponding battery cell units 106) connected in parallel, and configured to supply an aggregated output voltage of 400V. Various other configurations are envisioned.

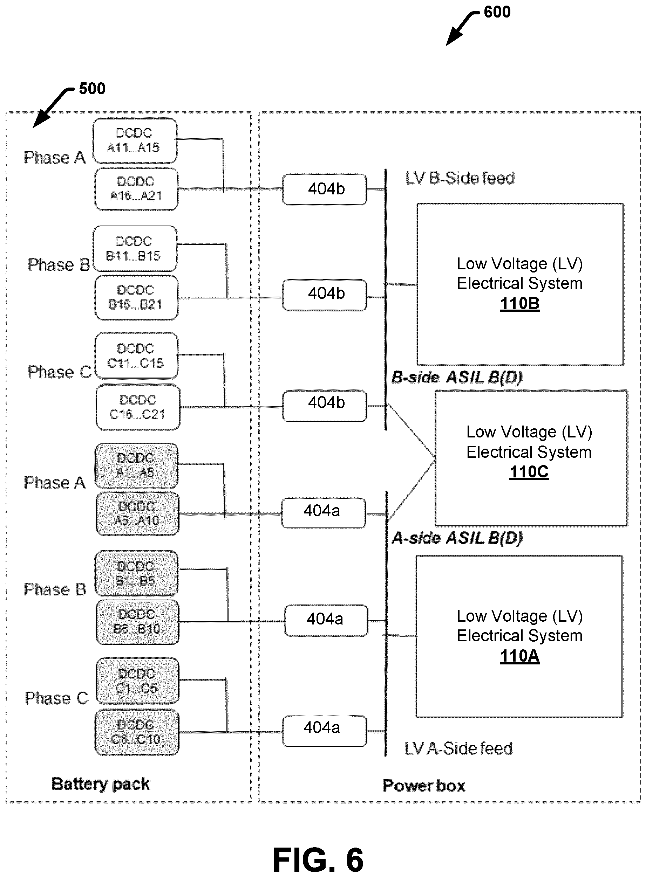

FIG. 6 illustrates an example arrangement 600 for electrically connecting the DCDC converters of the A-Side LV power supply system (e.g., Group 1) and the B-Side LV power supply system to different LV electrical systems as grouped into electrically connected subsets in accordance with example arrangement 500 and the embodiment shown in FIG. 4. Wired connections between respective electrical components (e.g., DCDC converter subsets, smart fuses 404a and 404b, and the LV electrical systems 110A, 110B and 110C are respectively represented in FIG. 6 by solid lines. With reference to FIGs. 1-6, in accordance with arrangement 600, the portion of the battery pack forming the A-Side LV power supply system (e.g., Group 1) and the B-Side LV power supply system groups the respective DCDC converters in accordance with arrangement 500. As noted above, dual A-Side and B-side LV power supply systems can be utilized to provide redundant power channels to one or more LV electrical systems of the vehicle that require two independently controlled systems in accordance with ASIL requirements (e.g., to provide a back-up source of power in the event either channel malfunctions or double the power supply is needed), such as an autonomous drive system and others. This can be accomplished using the A-Side LV power supply system (e.g., Group 1) and the B-Side LV power supply system (Group 2) in accordance with example arrangement 600. In this example, the LV electrical systems 110 illustrated in FIG. 1 include three different electrical systems, respectively represented in FIG. 6 as LV electrical system 110A, LV electrical system 110B and LV electrical system 110C. In this example, LV electrical system 110C corresponds to an electrical system of the vehicle that requires redundant power channels, such as an autonomous drive system or another critical system.

As shown in FIG. 6, the both the A-Side LV power supply system (e.g., Group 1) and the B-Side LV power supply system (Group 2) can be connected to and feed LV electrical system 110C and independently controlled via the master controller 304 as needed based on poser demands of the LV electrical system 110C. The A-Side LV power supply system (e.g., Group 1) can also be connected to and feed LV electrical system 110A as independently controlled by the master controller 304 as needed based on power demands of LV electrical system 110A, and the B-Side LV power supply system (Group 2) can be electrically connected to and feed LV electrical system 110B, as independently controlled by the master controller 304 based on power demands of the LV electrical system 110B. In various embodiments, the smart fuses 404a and 404b respectively can respectively be included in the power box between the respective input power channels and the corresponding electrical system to which they connect to protect the electrical system if there in an internal short in one DCDC converter subset in the battery pack (e.g., back feeding from other DCDC subsets). In some embodiments, all of the DCDC subsets can also include internal fuse functionality to protect the electrical system or systems to which they are connected from load at short in the secondary side of the DCDC subset. It should also be noted that since the A-side and the B-side may have different power consumptions depending on the demands of the respective electrical systems to which they are connected, this can create an unbalance between the respective power supply systems. In embodiments in which the respective LV power supply systems are also used to feed the propulsion system (e.g., the one or more motors 114), the master controller can 304 can control the priority usage of the corresponding battery cell clusters as used for propulsion energy supply to balance the SoC of the respective battery clusters across three phases and the A and B sides of the LV power supply systems. Also, if reversed current needs to supplied to the battery pack from the grid shown in FIG. 4 (i.e., the "board net") during operation of the vehicle to charge the respective battery cells, in some embodiments, the master controller 304 can reserve a few DCDC subsets or individual DCDC converters of the respective DC power supply systems (e.g., corresponding to Groups 1, 2 and 3) and configure them to operate only in the direction to transfer power from the vehicle board net to the battery cells. This can be accomplished by setting their respective Vsps to a low value (e.g., zero or below the minimum Vsp) and directing them to operate in the direction of transfer of energy from the grid to the battery cells (as opposed to the electrical systems to which they are connected).

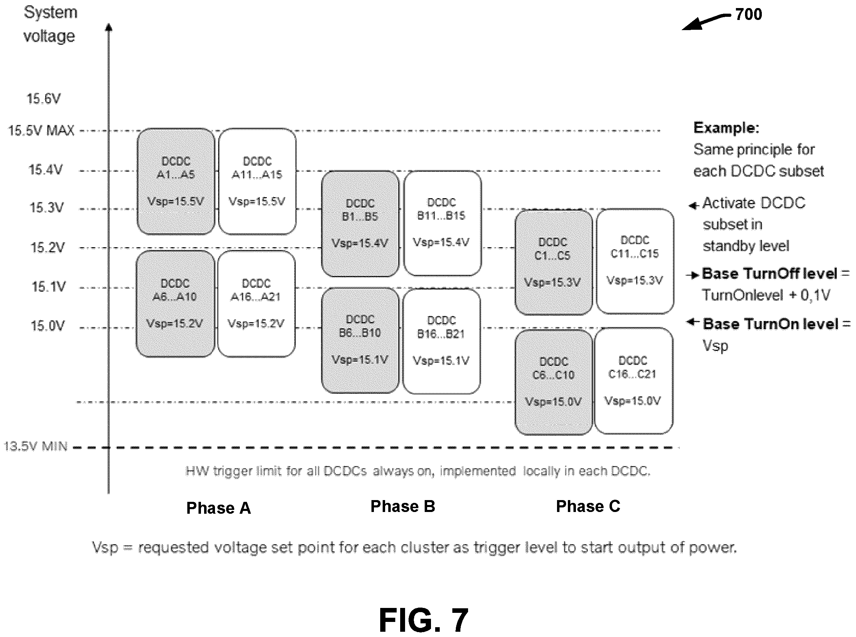

FIG. 7 illustrates an example control arrangement 700 for controlling subsets of DCDC converters of a distributed system of DCDC converters (e.g., smartcell battery system 102) in accordance with one or more embodiments described herein. Control arrangement 700 is exemplified with respect to the A-Side LV power supply system (e.g., Group 1) and the B-Side LV power supply system (e.g., Group 2) using respective subsets of DCDC converters grouped in accordance with example arrangement 500. In this regard, the subset of DCDC converters belonging to the A-Side LV power supply system (e.g., Group 1) are indicated with gray fill and the subsets of DCDC converters belonging to the B-Side LV power supply system (e.g., Group 2) are indicated with white fill. The control arrangement 700 can similarly be applied to smaller or greater subsets of DCDC converters as well as individual DCDC converters.

As illustrated in FIG. 700, different subsets of DCDC converters of the same power supply system can be assigned (e.g., via the master controller 304) different Vsps with a defined offset voltage between the different Vsps (e.g., 0.1 V in this example) in a linear cascading or descending order within a predetermined minimum and maximum Vsp (in this example, the minimum Vsp is 13.5 and the maximum Vsp is 15.5). For example, with reference to the A-Side LV power supply system, a first subset of DCDC converters (e.g., DCDC A1-A5) can be assigned a highest Vsp set to the maximum Vsp (e.g., 15.5V), a second subset of DCDC converters (e.g., DCDC B1-B5) can be assigned a second Vsp (e.g., 15.4 V) lower than the highest Vsp with an offset of 0.1 V, a third subset of DCDC converters (e.g., DCDC C1-C5) can be assigned a third Vsp (e.g., 15.3 V) lower than the second Vsp with an offset of 0.1 V, a fourth subset of DCDC converters (e.g., DCDC A6-C10) can be assigned a fourth Vsp (e.g., 15.2 V) lower than the third Vsp with an offset of 0.1 V, a fifth subset of DCDC converters (e.g., DCDC B6-B10) can be assigned a fifth Vsp (e.g., 15.1 V) lower than the fourth Vsp with an offset of 0.1 V, and a sixth subset of DCDC converters (e.g., DCDC C6-C10) can be assigned a sixth Vsp (e.g., 15.0 V) lower than the fifth Vsp with an offset of 0.1 V. In this example, the same control arrangement is used for the A-Side LV power supply system (e.g., Group 1) and the B-Side LV power supply system (e.g., Group 2).

In accordance with control arrangement 700, different Vsp are assigned different subsets of DCDC converters in accordance with a priority order or distribution that balances and rotates utilization of subsets of DCDC converters between the three phases or strings (e.g., Phase A, Phase B and Phase C). As described above, the Vsp assigned to each subset controls when the DCDC converters of the subset automatically activate (e.g., turn on) and deactivate (e.g., turn off) generation and provision of an aggregated DC output voltage to the electrical system to which they are connected based on whether the system voltage of the electrical systems increases or decreases relative to its assigned Vsp. For example, in accordance with control arrangement 700 and the A-Side LV power supply system, by assigning a subset a Vsp at the maximum value, DCDC A1-A5 in this example, the subset will be triggered to activate generation and provision of an output voltage to the electrical system when the system voltage is at 15.5 V or lower. In some embodiments, the next priority subset, that is the subset with the next highest Vsp (e.g., DCDC B1-B5 in this example), can be activated in a standby mode when the system voltage reaches a voltage level that is 0.1 V greater than its Vsp. When the system voltage reaches 15.4 V, the second subset of DCDC converters (e.g., DCDC B1-B5) can activate generation and provision of an output voltage to the electrical system and the next subset down the priority order can enter standby mode, and so on. As the system voltage drops to 15.0V based on the load on the electrical system increasing, in this example, all of the DCDC converter subsets will be activated. In various embodiments, each of the DCDC converter subsets can be configured to automatically turn on if the system voltage level decreases to or below a minimum level (e.g., 13.5 V in this example). Likewise, as the electrical system voltage increases based on the load on the electrical system decreasing, the respective DCDC subsets can automatically deactivate (e.g., turn off) when the system voltage increases above their respective Vsps, with a restriction of requiring at least one subset (e.g., that with the highest Vsp) to remain always activated.

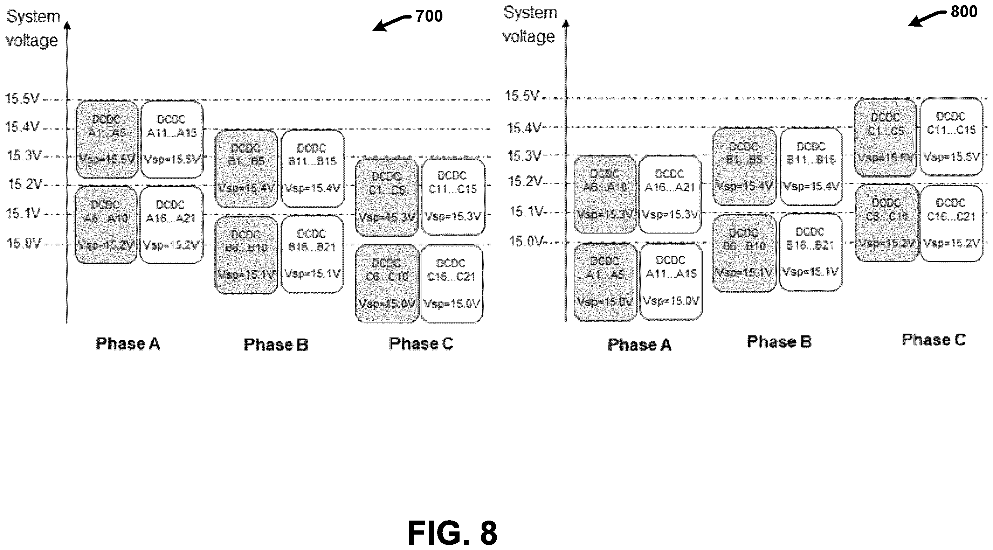

In various embodiments, the DCDC converter subsets (and individual DCDC converters) can be controlled in this manner with some hysteresis between turn on and turn off times to avoid frequent on and off switching. For example, the turn off can be 0.0-0.5V higher than turn on level if needed for stability reasons. With this control arrangement, good system efficiency is achieved since the number of DCDC converters that are active always correspond to the electrical load in corresponding electrical system to which they are connected. This means that the DCDC converters that are active will be fully loaded, providing for optimized utilization of the respective DCDC converters in implementations in which the type of the DCDC converters utilized are configured to work most efficiently under full loads (e.g., as opposed to some types of DCDC converters designed with an optimal efficiency point at partial loads). As described above, in various embodiments, the master controller 304 can assign the different Vsps to the DCDC converter subsets (and individual DCDC converters in embodiments in which the subsets include or correspond to a single DCDC converter) based on the SoC of the respective battery cell clusters to which they are connected, wherein the higher the SoC the higher the Vsp assigned. The master controller 304 can also assign the different Vsp based on other battery cell parameters, such as temperature, SoH, and others, such that the priority order resulting from the assignment distribution results in utilizing those battery cell clusters with greater SoH, optimal temperature level, and so on, before those with lower SoH, less optimal temperature level, and so on. The master controller 304 can further change the Vsps assigned to the respective subsets of DCDC converters based on changes to their SoC, SoH, temperature and other parameters. The master controller 304 can further change the Vsps assigned to the respective subsets such that the priority order rotates and balances utilization of the respective subsets and their battery clusters between the three phases over time, as illustrated in FIG. 8.

FIG. 8 illustrates examples control arrangements for balancing utilization of DCDC converters of a distributed system of DCDC converters in accordance with one or more embodiments described herein. In particular, FIG. 8 illustrates control arrangement 700 and a second control arrangement 800 for the same subsets of DCDC converters. In various embodiments, the master controller 304 can reassign the different Vsps to the respective subsets of DCDC converters as assigned in accordance with control arrangement 700 to the assignment schedule illustrated in accordance with control arrangement 800 after passage of a defined amount of time and/or as needed (e.g., based on SoC, SoH, temperature, etc.) to rotate the priority order in which the respective DCDC subsets and their respective battery cell clusters are utilized. In this regard, the priority order of battery clusters can be controlled by shifting the Vsp commands from the master controller 304 to get rotation of energy usage between battery clusters and ensure that the energy balance between the three phases of the battery pack is maintained.

In this regard, with reference to FIGs. 1-8, as described above with reference to FIGs. 1-3, the master controller 304 can continuously or regularly (e.g., in accordance with a defined update rate) measure the operating voltages of the respective LV and HV electrical systems to which the respective power supply systems (e.g., Group 1, Group 2 and Group 3), and monitor the SoC, SoH, temperature of the respective battery cell clusters and determine and assigned the Vsp accordingly in accordance with a defined update rate. In some embodiments, the update rate for the master controller 304 can be about every 1.0 ms, resulting in a control loop with an update rate of every 1.0 ms, however other update rates may be applied.

In some embodiments, if the operating voltage of a particular electrical system starts to decrease below a predefined limit, the master controller 304 can be configured to increase the Vsps assigned to the respective DCDC converters (or DCDC converter subsets), connected to the electrical system by a defined amount (e.g., 0.1 V for example), except for the one or ones that already are at the highest Vsp (i.e. that are highest in priority), with an offset voltage of +0.1V steps for each turn in the control loop. Similarly, if the voltage of a particular electrical system starts to increase over a predefined limit, the master controller 304 can be configured to decrease the Vsps assigned to the respective DCDC converters (or DCDC converter subsets) connected to the electrical system by a defined amount (e.g., 0.1 V for example), except for the one or ones that already are at the highest Vsp (i.e. that are highest in priority), with an offset voltage of +0.1V steps for each turn in the control loop. With this master control loop control protocol, the master controller 304 can advantageously adjust the operating parameters (e.g., the Vsps) of the power supply systems to the respective LV and HV electrical systems of the vehicle to operate at the optimal voltage levels for the electrical loads. At the same time the DCDC system will automatically engage all DCDC converters very fast, by the base directing each of the DCDC converters (or subsets of DCDC converters) to turn on if the system voltage decreases relative to a minimum Vsp, such as in response to a large transient increase in electrical load but with a temporary decrease in system voltage. Likewise, if the high electrical load remains or is decreased, the master controller control loop will adjust the power supply system operating parameters to optimally match the power consumption demands of the electrical system. It should be appreciated that the master controller 304 can control each of the respective power supply systems (e.g., Group 1, Group 2, and Group 3) independently in the same manner using separate control loops.

The disclosed DCDC converter control strategy for the smartcell battery system 102 thus provides several advantages. In particular, the controls strategy efficiently utilize the respective battery cell clusters connected to the respective DCDC converters based on need, as the individual DCDCs that are on and used always corresponds to the electrical load of the vehicle electrical system to which they supply. This means that each DCDC will operate at a high load and give good efficiency. The control strategy is further safe, since all DCDC converters will be triggered to be on by hardware circuit if the voltage on the secondary side goes lower than a predefined minimum voltage level. This means it will not be dependent of any SW to enable maximum power delivery at low voltage levels. If dual hardware and SW implementations from different suppliers are used for the DCDC design the risk for systematic faults can be minimized. The control strategy is further robust there is a high level of redundancy in the distributed system of DCDC converters and each DCDC converter is feed by its own battery cells. This means that a fault in one battery cell or DCDC converter just means a power loss from only one DCDC which can be accommodated by the remaining working DCDC converters. Furthermore, since the LV electrical loads that need redundancy can be fed from two independent power channels (e.g., LV, A-Side and B-side) with ASIL B(D), ASIL D can be met on a system level.

In some embodiments, the master controller 304 can also control the DCDC converters or subset of DCDC converters when the electrical system is inactive. For example, the output voltage to a LV electrical system from the DCDCs can be set to 15.5V. When the vehicle is parked and at low energy consumption, it will most likely be enough to keep only one or two DCDC converters or subsets active to feed the LV electrical system (or two if both LV A- and B-side needs to be fed). This can be handled by setting a higher Vsp to one DCDC in the LV A-side and one DCDC in LV B-side. This would most likely increase efficiency since the single DCDC converter or subset will operate in a more efficient working point especially if it can be kept at resonant frequency. To get energy balance in battery pack the energy can be taken from the part of the battery pack that has highest SoC and rotated between different DCDC converters over time and different parts of the battery pack.

In some embodiments, the master controller 304 can also perform a fault handling procedure for handling faults within the LV DCDC subsets. A fault handling strategy is needed on system level if there is a fault detected in one or several DCDC converters or subsets of DCDC converters that affect the performance of power production. The fault handling strategy must ensure that the system safety goals are met at all times when the vehicle is driven to meet ASIL D on system level in the vehicle. In some embodiments, the DCDC converter solution in the system solution can preferably be from two different suppliers to minimize the risk of systematic fault in the DCDC converter system solution for the smartcell battery system 102. Therefore, the master controller 304 needs to monitor all DCDC converters, handle the fault, and inform the driver of the car if the power output to the LV board net can no longer meet the system safety requirements. This means that the vehicle can most likely be operated with a few DCDC converters that are failing in production of output power but the master controller 304 must ensure the total available power from the available DCDC converters or subsets of DCDC converters on both LV A- and B-side is sufficient to meet the system safety requirements.

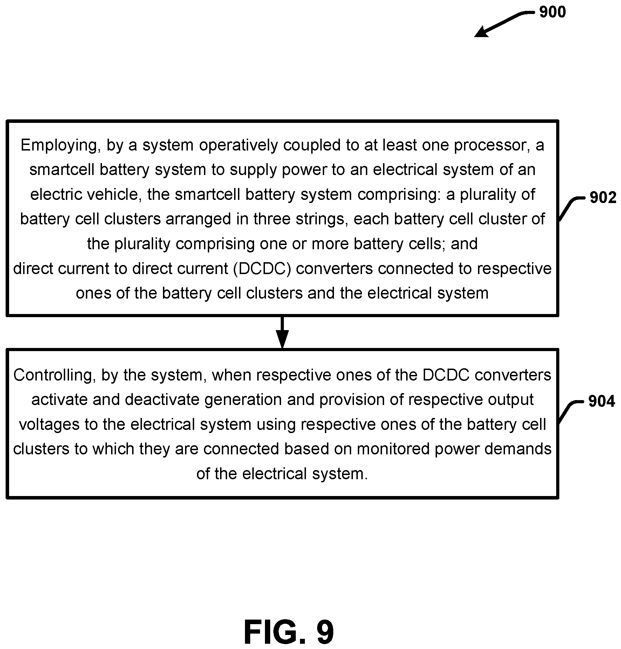

FIG. 9 illustrates an example, computer-implemented method 900 for optimizing control of a distributed system of DCDC converters in accordance with one or more embodiments described herein. In accordance with method 900, at 902, a system operatively coupled to at least one processor (e.g., electric vehicle 100, master board 104, or the like) can employ a smartcell battery system (e.g., smartcell battery system 102) to supply power to an electrical system of an electric vehicle, the smartcell battery system comprising a plurality of battery cell clusters arranged in three strings, each battery cell cluster of the plurality comprising one or more battery cells, DCDC converters connected to respective ones of the battery cell clusters and the electrical system. At 904, the system can control when respective ones of the DCDC converters activate and deactivate generation and provision of respective output voltages to the electrical system using respective ones of the battery cell clusters to which they are connected based on monitored power demands of the electrical system.

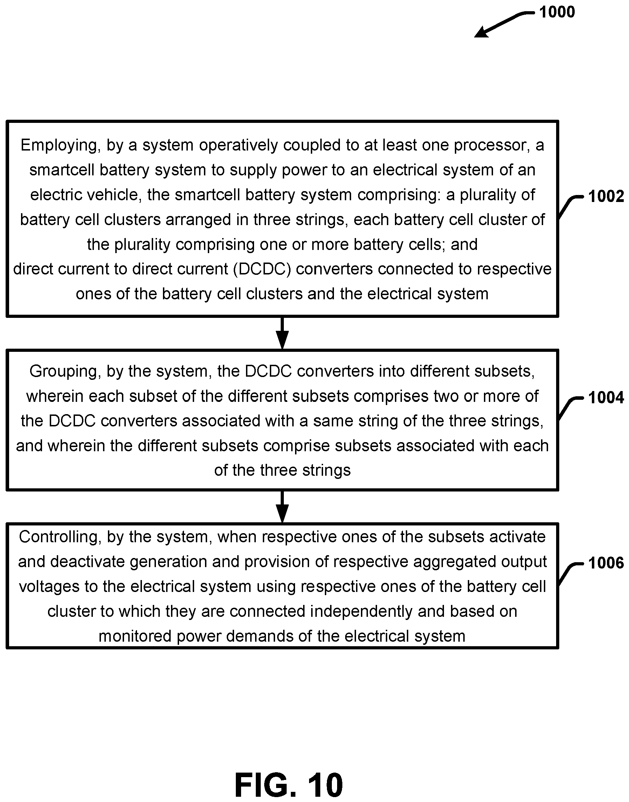

FIG. 10 illustrates another example, computer-implemented method 100 for optimizing control of a distributed system of DCDC converters in accordance with one or more embodiments described herein. In accordance with method 1000, at 1002, a system operatively coupled to at least one processor (e.g., electric vehicle 100, master board 104, or the like) can employ a smartcell battery system (e.g., smartcell battery system 102) to supply power to an electrical system of an electric vehicle, the smartcell battery system comprising a plurality of battery cell clusters arranged in three strings, each battery cell cluster of the plurality comprising one or more battery cells, DCDC converters connected to respective ones of the battery cell clusters and the electrical system. At 1004, the system can group the DCDC converters into different subsets, wherein each subset of the different subsets comprises two or more of the DCDC converters associated with a same string of the three strings, and wherein the different subsets comprise subsets associated with each of the three strings. At 1006, the system can control when respective ones of the subsets activate and deactivate generation and provision of respective aggregated output voltages to the electrical system using respective ones of the battery cell cluster to which they are connected independently and based on monitored power demands of the electrical system.

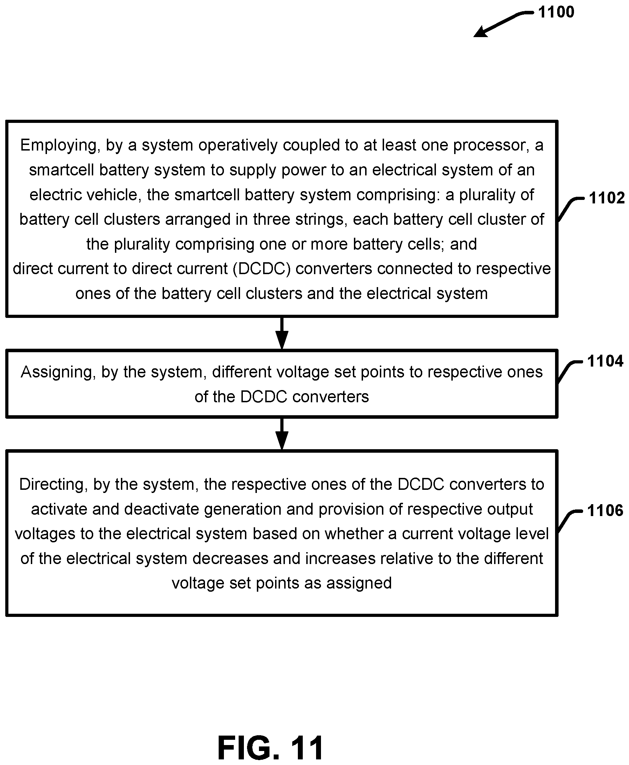

FIG. 11 illustrates another example, computer-implemented method 1100 for optimizing control of a distributed system of DCDC converters in accordance with one or more embodiments described herein. In accordance with method 1100, at 1102, a system operatively coupled to at least one processor (e.g., electric vehicle 100, master board 104, or the like) can employ a smartcell battery system (e.g., smartcell battery system 102) to supply power to an electrical system of an electric vehicle, the smartcell battery system comprising a plurality of battery cell clusters arranged in three strings, each battery cell cluster of the plurality comprising one or more battery cells, DCDC converters connected to respective ones of the battery cell clusters and the electrical system. At 1104, the system can assign different Vsps to respective ones of the DCDC converters (or respective ones of subsets of the DCDC converters). At 1106, the system can direct (e.g., via the master controller 304 and/or the local controller 204) the respective ones of the DCDC converters (or the respective ones of the subsets of DCDC converters) to activate and deactivate generation and provision of respective output voltages to the electrical system based on whether a current voltage level of the electrical system decreases and increases relative to the different voltage set points as assigned.

In various embodiments, the in accordance with method 1100, the different Vsps control a priority order in which the respective ones of the DCDC converters generate and provide the respective output voltages to the electrical system. The system (e.g., the master controller 304) can further periodically adjust the different Vsp points assigned to the respective ones of the DCDC converters in a manner that rotates the priority order amongst the DCDC converters over time.

The one or more flowcharts and/or block diagrams in the figures illustrate the architecture, functionality, and operation of one or more possible implementations of one or more systems, apparatuses and/or methods according to various embodiments described herein. In this regard, one or more blocks in the one or more flowcharts and/or block diagrams can represent a module, segment and/or portion of instructions, which can comprise one or more executable instructions for implementing the specified logical function(s). In one or more alternative implementations, one or more functions noted in one or more of the blocks can occur out of the order illustrated in the Figures. For example, one or more blocks shown in succession can be executed substantially concurrently and/or the one or more blocks can be executed in a reverse order as that illustrated, such as depending upon a functionality involved. It also will be noted that one or more blocks of the one or more flowcharts and/or block diagrams, and/or one or more combinations of one or more blocks thereof, can be implemented by a special purpose hardware-based system that can perform one or more of the specified functions and/or can carry out one or more special purpose hardware and/or computer instructions.

As indicated, one or more aspects are described herein with reference to one or more flowchart illustrations and/or block diagrams of one or more methods, apparatuses and/or systems according to one or more embodiments described herein. It will be understood that one or more blocks of the one or more flowcharts and/or block diagrams, and/or one or more combinations of blocks in the one or more flowcharts and/or block diagrams, can be implemented by one or more computer-readable program instructions.

The computer-readable program instructions can be provided to a processor of a general purpose computer, special purpose computer and/or other programmable data processing apparatus to produce a machine. For example, the instructions, which can execute via the processor of the computer and/or other programmable data-processing apparatus, can create one or more means for implementing the one or more functions and/or processes specified in the one or more flowchart and/or block diagram blocks. The computer-readable program instructions can be stored in a computer-readable storage medium that can direct a computer, programmable data processing apparatus and/or other device to function in a particular manner. For example, the computer-readable storage medium having instructions stored therein can comprise an article of manufacture including instructions that can implement one or more aspects of the one or more functions and/or processes specified in the one or more flowchart and/or block diagram blocks. The computer-readable program instructions can be loaded onto a computer, other programmable data processing apparatus and/or other device to cause one or more operational acts to be performed on the computer, other programmable apparatus and/or other device to produce a computer-implemented process. For example, the instructions that can execute on the computer, other programmable apparatus and/or other device can implement the one or more functions and/or processes specified in the one or more flowchart and/or block diagram blocks.

As it is employed in the subject specification, the term "processor" or "processing unit" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a graphics processing unit (GPU), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor can also be implemented as a combination of computing processing units. As used herein, terms such as "store," "storage," "data store," data storage," "database," and substantially any other information storage component relevant to operation and functionality of a component are utilized to refer to "memory components," entities embodied in a "memory," or components comprising a memory. A processor can employ distributed and/or federated machine intelligence, which can be employed to operate and/or facilitate one or more of the aforementioned computer-readable program instructions.

Memory and/or memory components described herein can be either volatile memory or nonvolatile memory, and/or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

What has been described herein includes one or more mere examples of one or more systems and/or methods. It is, of course, not possible to describe every conceivable combination of components and/or system-implemented methods for purposes of describing the subject matter. Nonetheless, one of ordinary skill in the art can recognize that one or more further combinations and/or permutations of the disclosed subject matter are possible. Furthermore, to the extent that the terms "includes", "has", "possesses" and/or the like are used in the detailed description, claims, appendices and/or drawings, such terms are intended to be inclusive in a manner similar to the term "comprising" as "comprising" is interpreted when employed as a transitional word in a claim.

It will be understood that when an element is referred to as being "coupled" to another element, the term "coupled" can describe one or more different types of coupling including, but not limited to, chemical coupling, communicative coupling, capacitive coupling, electrical coupling, electromagnetic coupling, inductive coupling, operative coupling, optical coupling, physical coupling, thermal coupling and/or another type of coupling. As referenced herein, an "entity" can comprise a machine, device, hardware, software, computing device and/or human. Such entity can facilitate implementation of the subject matter disclosed herein in accordance with one or more embodiments described herein.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form. As used herein, the terms "example" and/or "exemplary" are utilized to mean serving as an example, instance and/or illustration. For the avoidance of doubt, the subject matter disclosed herein is not limited by such examples. In addition, any aspect and/or design described herein as an "example" and/or "exemplary" is not necessarily to be construed as preferred and/or advantageous over other aspects or designs, nor is it meant to preclude equivalent exemplary structures and/or techniques known to those of ordinary skill in the art.

The description of the one or more various embodiments provided herein has been presented for purposes of illustration but is not intended to be exhaustive and/or limited to the one or more embodiments disclosed. One or more modifications and/or variations will be apparent to those of ordinary skill in the art without departing from the scope and/or spirit of the described embodiments. The terminology used herein was chosen to best explain the principles of the embodiments, practical application and/or technical improvement over technologies found in the marketplace, and/or to enable others of ordinary skill in the art to understand the embodiments disclosed herein.

What has been described above include mere examples of systems and computer-implemented methods. It is, of course, not possible to describe every conceivable combination of components or computer-implemented methods for purposes of describing this disclosure, but one of ordinary skill in the art can recognize that many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim. The descriptions of the various embodiments have been presented for purposes of illustration, but are not intended to be exhaustive or limited to the embodiments disclosed. Many modifications and variations can be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

Various non-limiting aspects of various embodiments described herein are presented in the following clauses.
1. A method, comprising:
   employing, by a system operatively coupled to at least one processor, a smartcell battery system to supply power to an electrical system of an electric vehicle, the smartcell battery system comprising:
      a plurality of battery cell clusters arranged in three strings, each battery cell cluster of the plurality comprising one or more battery cells; and
      direct current to direct current (DCDC) converters connected to respective ones of the battery cell clusters and the electrical system; and
   controlling, by the system, when respective ones of the DCDC converters activate and deactivate generation and provision of respective output voltages to the electrical system using respective ones of the battery cell clusters to which they are connected based on monitored power demands of the electrical system.
2. The method of clause 1, further comprising:
   grouping, by the system, the DCDC converters into different subsets, wherein each subset of the different subsets comprises two or more of the DCDC converters associated with a same string of the three strings, wherein the different subsets comprise subsets associated with each of the three strings, and wherein the controlling comprises:
   controlling, by the system, when respective ones of the subsets activate and deactivate generation and provision of respective aggregated output voltages to the electrical system using respective ones of the of the battery cell clusters to which the subsets are connected based on the monitored power demands of the electrical system.
3. The method of clause 2, wherein the controlling comprises:
   assigning, by the system, different voltage set points to the different subsets; and
   directing, by the system, the different subsets to activate and deactivate the generation and provision of the respective aggregated output voltages to the electrical system based on whether a current voltage level of the electrical system decreases and increases relative to the different voltage set points as assigned.
4. The method of clause 3, wherein the assigning comprises assigning a same voltage set point to all of the two or more of the DCDC converters included in a same subset, and wherein the directing comprises directing all of the two or more of the DCDC converters to activate and deactivate generation and provision of a collective output voltage to the electrical system in accordance with the same voltage set point.
5. The method of clause 1, wherein the controlling comprises:
   assigning, by the system, different voltage set points to the respective ones of the DCDC converters; and
   directing, by the system, the respective ones of the DCDC converters to activate and deactivate the generation and provision of the respective output voltages to the electrical system based on whether a current voltage level of the electrical system decreases and increases relative to the different voltage set points as assigned.
6. The method of clause 5, wherein the controlling further comprises:
   directing, by the system, all of the DCDC converters to activate the generation and provision of the respective output voltages to the electrical system based on whether the current voltage level of the electrical system decreases below a minimum voltage set point.
7. The method of clause 5, wherein the assigning comprises assigning the different voltage set points based on states of charge of the respective ones of the battery cell clusters to which the DCDC converters are respectively connected.
8. The method of clause 7, wherein the assigning comprises adjusting the different voltage set points assigned to the DCDC converters based on changes to the states of charge.
9. The method of clause 5, wherein the different voltage set points control a priority order in which the respective ones of the DCDC converters activate and deactivate the generation and provision of the respective output voltages to the electrical system, and wherein the assigning comprises assigning the different voltage set points such that the priority order balances utilization of the DCDC converters between the three strings.
10. The method of clause 5, wherein the different voltage set points control a priority order in which the respective ones of the DCDC activate and deactivate the generation and provision of the respective output voltages to the electrical system, and wherein the assigning comprises periodically adjusting, by the system, the different voltage set points assigned to the DCDC converters in a manner that rotates the priority order amongst the DCDC converters over time.
11. The method of clause 5, wherein the assigning comprises transmitting, by the system, control information to the DCDC converts identifying the different voltage set points to which they are respectively assigned, wherein based on reception of the control information, the DCDC converters operate in accordance with the with the different voltage set points as assigned.
12. The method of clause 1, wherein the plurality of battery cell clusters comprise a first group of battery cell clusters that provide a first power source to the electrical system and a second group of battery cell clusters that provide a second power source to the electrical system independent from the first power source, wherein respective first DCDC converters of the first group are electrically connected to one another and the electrically system, wherein respective second DCDC converters of the second group are electrically connected to one another and electrical system, and wherein the controlling comprises:
   separately controlling, by the system, activation and deactivation of provision of first output voltages to the electrical system from the respective first DCDC converters and activation and deactivation of provision of second output voltages to the electrical system from the respective second DCDC converters.
13. A smartcell battery system that supplies power to an electrical system of an electric vehicle, the smartcell battery system comprising:
   a plurality of battery cell clusters arranged in three strings, each battery cell cluster of the plurality comprising one or more battery cells;
   direct current to direct current (DCDC) converters connected to respective ones of the battery cell clusters and the electrical system; and
   a master controller that controls when respective ones of the DCDC converters activate and deactivate generation and provision of respective output voltages to the electrical system using respective ones of the battery cell clusters to which they are connected based on monitored power demands of the electrical system.
14. The smartcell battery system of clause 13, wherein the master controller groups the DCDC converters into different subsets, wherein each subset of the different subsets comprises two or more of the DCDC converters associated with a same string of the three strings, wherein the different subsets comprise subsets associated with each of the three strings, and wherein the master controller controls when respective ones of the subsets activate and deactivate generation and provision of respective aggregated output voltages to the electrical system using respective ones of the of the battery cell clusters to which the subsets are connected based on the monitored power demands of the electrical system.
15. The smartcell battery system of clause 13, wherein the master controller:
   assigns different voltage set points to the respective ones of the DCDC converters; and
   directs the respective ones of the DCDC converters to activate and deactivate the generation and provision of the respective ones of the output voltages to the electrical system based on whether a current voltage level of the electrical system decreases and increases relative to the different voltage set points as assigned.
16. The smartcell battery system of clause 15, wherein the master controller:
   directs all of the DCDC converters to activate the generation and provision of the respective output voltages to the electrical system based on whether the current voltage level of the electrical decreases below a minimum voltage set point.
17. The smartcell battery system of clause 15, wherein the master controller assigns the different voltage set points based on states of charge of the respective ones of the battery cell clusters to which the DCDC converters are respectively connected, and wherein the master controller adjusts the different voltage set points assigned to the DCDC converters based on changes to the states of charge.
18. The smartcell battery system of clause 15, wherein the different voltage set points control a priority order in which the respective ones of the DCDC converters generate and provide the respective ones of the output voltages to the electrical system, and wherein the master controller assigns the different voltage set points such that the priority order balances utilization of the DCDC converters between the three strings.
19. The smartcell battery system of clause 15, wherein the different voltage set points control a priority order in which the respective ones of the DCDC converters activate and deactivate the generation and provision of the respective output voltages to the electrical system, and wherein the master controller periodically adjusts the different voltage set points assigned to the DCDC converters in a manner that rotates the priority order amongst the DCDC converters over time.
20. A computer program product that facilitates controlling power supplied to an electrical system of an electric vehicle from a smartcell battery system comprising:
   a plurality of battery cell clusters arranged in three strings, each battery cell cluster of the plurality comprising one or more battery cells; and
   direct current to direct current (DCDC) converters connected to respective ones of the battery cell clusters;
   the computer program product comprising a non-transitory computer readable medium having program instructions embodied therewith, the program instructions executable by a processor to cause the processors to:
      control when respective ones of the DCDC converters activate and deactivate generation and provision of respective output voltages to the electrical system using respective ones of the battery cell clusters to which they are connected based on monitored power demands of the electrical system.

## Claims

1. A method, comprising:
employing, by a system operatively coupled to at least one processor, a smartcell battery system to supply power to an electrical system of an electric vehicle, the smartcell battery system comprising:
a plurality of battery cell clusters arranged in three strings, each battery cell cluster of the plurality comprising one or more battery cells; and
direct current to direct current (DCDC) converters connected to respective ones of the battery cell clusters and the electrical system; and
controlling, by the system, when respective ones of the DCDC converters activate and deactivate generation and provision of respective output voltages to the electrical system using respective ones of the battery cell clusters to which they are connected based on monitored power demands of the electrical system.

2. The method of claim 1, further comprising:
grouping, by the system, the DCDC converters into different subsets, wherein each subset of the different subsets comprises two or more of the DCDC converters associated with a same string of the three strings, wherein the different subsets comprise subsets associated with each of the three strings, and wherein the controlling comprises:
controlling, by the system, when respective ones of the subsets activate and deactivate generation and provision of respective aggregated output voltages to the electrical system using respective ones of the of the battery cell clusters to which the subsets are connected based on the monitored power demands of the electrical system.

3. The method of claim 2, wherein the controlling comprises:
assigning, by the system, different voltage set points to the different subsets; and
directing, by the system, the different subsets to activate and deactivate the generation and provision of the respective aggregated output voltages to the electrical system based on whether a current voltage level of the electrical system decreases and increases relative to the different voltage set points as assigned.

4. The method of claim 3, wherein the assigning comprises assigning a same voltage set point to all of the two or more of the DCDC converters included in a same subset, and wherein the directing comprises directing all of the two or more of the DCDC converters to activate and deactivate generation and provision of a collective output voltage to the electrical system in accordance with the same voltage set point.

5. The method of claim 1, wherein the controlling comprises:
assigning, by the system, different voltage set points to the respective ones of the DCDC converters; and
directing, by the system, the respective ones of the DCDC converters to activate and deactivate the generation and provision of the respective output voltages to the electrical system based on whether a current voltage level of the electrical system decreases and increases relative to the different voltage set points as assigned.

6. The method of claim 5, wherein the controlling further comprises:
directing, by the system, all of the DCDC converters to activate the generation and provision of the respective output voltages to the electrical system based on whether the current voltage level of the electrical system decreases below a minimum voltage set point, or
wherein the assigning comprises assigning the different voltage set points based on states of charge of the respective ones of the battery cell clusters to which the DCDC converters are respectively connected.

7. The method of claim 5, wherein the different voltage set points control a priority order in which the respective ones of the DCDC converters activate and deactivate the generation and provision of the respective output voltages to the electrical system, and wherein the assigning comprises assigning the different voltage set points such that the priority order balances utilization of the DCDC converters between the three strings, or
wherein the different voltage set points control a priority order in which the respective ones of the DCDC activate and deactivate the generation and provision of the respective output voltages to the electrical system, and wherein the assigning comprises periodically adjusting, by the system, the different voltage set points assigned to the DCDC converters in a manner that rotates the priority order amongst the DCDC converters over time.

8. The method of claim 5, wherein the assigning comprises transmitting, by the system, control information to the DCDC converts identifying the different voltage set points to which they are respectively assigned, wherein based on reception of the control information, the DCDC converters operate in accordance with the with the different voltage set points as assigned.

9. The method of claim 1, wherein the plurality of battery cell clusters comprise a first group of battery cell clusters that provide a first power source to the electrical system and a second group of battery cell clusters that provide a second power source to the electrical system independent from the first power source, wherein respective first DCDC converters of the first group are electrically connected to one another and the electrically system, wherein respective second DCDC converters of the second group are electrically connected to one another and electrical system, and wherein the controlling comprises:
separately controlling, by the system, activation and deactivation of provision of first output voltages to the electrical system from the respective first DCDC converters and activation and deactivation of provision of second output voltages to the electrical system from the respective second DCDC converters.

10. A smartcell battery system that supplies power to an electrical system of an electric vehicle, the smartcell battery system comprising:
a plurality of battery cell clusters arranged in three strings, each battery cell cluster of the plurality comprising one or more battery cells;
direct current to direct current (DCDC) converters connected to respective ones of the battery cell clusters and the electrical system; and
a master controller that controls when respective ones of the DCDC converters activate and deactivate generation and provision of respective output voltages to the electrical system using respective ones of the battery cell clusters to which they are connected based on monitored power demands of the electrical system.

11. The smartcell battery system of claim 10, wherein the master controller groups the DCDC converters into different subsets, wherein each subset of the different subsets comprises two or more of the DCDC converters associated with a same string of the three strings, wherein the different subsets comprise subsets associated with each of the three strings, and wherein the master controller controls when respective ones of the subsets activate and deactivate generation and provision of respective aggregated output voltages to the electrical system using respective ones of the of the battery cell clusters to which the subsets are connected based on the monitored power demands of the electrical system.

12. The smartcell battery system of claim 10, wherein the master controller:
assigns different voltage set points to the respective ones of the DCDC converters; and
directs the respective ones of the DCDC converters to activate and deactivate the generation and provision of the respective ones of the output voltages to the electrical system based on whether a current voltage level of the electrical system decreases and increases relative to the different voltage set points as assigned.

13. The smartcell battery system of claim 12, wherein the master controller:
directs all of the DCDC converters to activate the generation and provision of the respective output voltages to the electrical system based on whether the current voltage level of the electrical decreases below a minimum voltage set point, or
wherein the master controller assigns the different voltage set points based on states of charge of the respective ones of the battery cell clusters to which the DCDC converters are respectively connected, and wherein the master controller adjusts the different voltage set points assigned to the DCDC converters based on changes to the states of charge.

14. The smartcell battery system of claim 12, wherein the different voltage set points control a priority order in which the respective ones of the DCDC converters generate and provide the respective ones of the output voltages to the electrical system, and wherein the master controller assigns the different voltage set points such that the priority order balances utilization of the DCDC converters between the three strings, or
wherein the different voltage set points control a priority order in which the respective ones of the DCDC converters activate and deactivate the generation and provision of the respective output voltages to the electrical system, and wherein the master controller periodically adjusts the different voltage set points assigned to the DCDC converters in a manner that rotates the priority order amongst the DCDC converters over time.

15. A computer program product that facilitates controlling power supplied to an electrical system of an electric vehicle from a smartcell battery system comprising:
a plurality of battery cell clusters arranged in three strings, each battery cell cluster of the plurality comprising one or more battery cells; and
direct current to direct current (DCDC) converters connected to respective ones of the battery cell clusters;
the computer program product comprising a non-transitory computer readable medium having program instructions embodied therewith, the program instructions executable by a processor to cause the processors to:
control when respective ones of the DCDC converters activate and deactivate generation and provision of respective output voltages to the electrical system using respective ones of the battery cell clusters to which they are connected based on monitored power demands of the electrical system.
